# EUROPÄISCHE PATENTSCHRIFT

(11) **EP 2 595 061 B1**
(45) Veröffentlichungstag und Bekanntmachung des Hinweises auf die Patenterteilung: **08.08.2018**
(21) Anmeldenummer: 12007224.4
(22) Anmeldetag: 17.10.2012
(51) Int. Cl.: G06F 12/14, G06F 21/77, G06F 21/14, G06F 21/79, G06F 21/56

(54) **Verfahren zum Schutz gegen Schadcode**
Method for protecting against malicious code
Procédé de protection contre un code malveillant

(30) Priorität: 15.11.2011 DE 102011118640
(43) Veröffentlichungstag der Anmeldung: 22.05.2013
(73) Patentinhaber: Giesecke+Devrient Mobile Security GmbH, 81677 München (DE)
(72) Erfinder: Butz, Klaus, 81675 München (DE)

(56) Entgegenhaltungen:
- WO-A1-01/17163
- NAK HEE SEONG ET AL: "Security refresh", PROCEEDINGS OF THE 37TH ANNUAL INTERNATIONAL SYMPOSIUM ON COMPUTER ARCHITECTURE, ISCA '10, 1. Januar 2010 (2010-01-01), Seite 383, XP055083743, New York, New York, USA DOI: 10.1145/1815961.1816014 ISBN: 978-1-45-030053-7
- Elisabeth Oswald ET AL: "Practical Second-Order DPA Attacks for Masked Smart Card Implementations of Block Ciphers" In: "LECTURE NOTES IN COMPUTER SCIENCE", 1. Januar 2006 (2006-01-01), Springer Berlin Heidelberg, Berlin, Heidelberg, XP055181276, ISSN: 0302-9743 ISBN: 978-3-54-045234-8 Bd. 3860, Seiten 192-207, DOI: 10.1007/11605805_13, * Seite 192 - Seite 204 *
- Pieter Philippaerts ET AL: "Code Pointer Masking: Hardening Applications against Code Injection Attacks" In: "LECTURE NOTES IN COMPUTER SCIENCE", 1. Januar 2011 (2011-01-01), Springer Berlin Heidelberg, Berlin, Heidelberg, XP055181484, ISSN: 0302-9743 ISBN: 978-3-54-045234-8 Bd. 6739, Seiten 194-213, DOI: 10.1007/978-3-642-22424-9_12, * Seite 1 - Seite 19 *
- Anonymous: "Mask (computing) - Wikipedia, the free encyclopedia", , 6. September 2011 (2011-09-06), XP055181202, Gefunden im Internet: URL:http://en.wikipedia.org/w/index.php?ti tle=Mask_(computing)&oldid=448809654 [gefunden am 2015-04-07]
- Hans-Ulrich Buchmüller ET AL: "Infineon Technologies Chipcard and Security", , 10. Juni 2010 (2010-06-10), XP055181328, Gefunden im Internet: URL:https://www.commoncriteriaportal.org/f iles/epfiles/0640b_pdf.pdf [gefunden am 2015-04-07]
- HRISTO BOJINOV ET AL: "Address space randomization for mobile devices", WIRELESS NETWORK SECURITY, ACM, 2 PENN PLAZA, SUITE 701 NEW YORK NY 10121-0701 USA, 14. Juni 2011 (2011-06-14), Seiten 127-138, XP058004119, DOI: 10.1145/1998412.1998434 ISBN: 978-1-4503-0692-8

## Beschreibung

Die vorliegende Erfindung betrifft ein Verfahren in einem portablen Datenträger zum Verhindern eines Angriffs auf den Datenträger mittels ausführbaren Programmcodes, insbesondere Schadcodes, sowie einen entsprechend eingerichteten Datenträger.

Portable Datenträger, beispielsweise Chipkarten oder dergleichen, umfassen in der Regel zumindest einen nichtflüchtigen, wiederbeschreibbaren Speicher, beispielsweise in Form eines FLASH- oder EEPROM-Speichers, sowie einen Prozessor. In dem Speicher des Datenträgers können gleichermaßen Nutzdaten, d.h. nicht ausführbare Daten, wie beispielsweise Textdateien, Foto-, Video- oder Musik-Daten, als auch auf dem Prozessor des Datenträgers ausführbarer Programmcode, beispielsweise in Form verschiedener Applikationen, gespeichert sein.

Gemäß einem bekannten Angriffsszenario versucht ein Angreifer in einem ersten Schritt Schadcode, d.h. auf dem Prozessor des Datenträgers ausführbaren Programmcode, mittels dessen beispielsweise sensible Informationen aus dem Speicher des Datenträgers ausgelesen werden können, als Nutzdaten "getarnt" in den Speicher des Datenträgers "einzuschleusen", d.h. darin zu speichern.

In einem zweiten Schritt wird dann ein Befehlszähler des Datenträgers durch externe Einwirkung auf den Datenträger derart verändert, dass der Befehlszähler in einen Speicherbereich des Speichers zeigt, in dem der Schadcode gespeichert ist, so dass dieser zur Ausführung kommt.
Der Befehlszähler (auch als "program counter" oder "PC" bezeichnet) ist dabei in der Regel als Register des Prozessors des Datenträgers ausgebildet, welches eine Speicheradresse des derzeitigen oder des nächsten auszuführenden Befehls enthält. Dass der Programmzähler in einen Speicherbereich bzw. auf eine Adresse des Speichers "zeigt", bedeutet im Rahmen der vorliegenden Erfindung, dass der Programmzähler eine Speicheradresse in dem Speicherbereich bzw. die Speicheradresse (der Adresse) enthält. Verschiedene Arten externer Einwirkung zum Herbeiführen von Fehlfunktionen in dem Datenträger sind bekannt. Zur Manipulation des Befehlszählers werden beispielsweise so genannte Licht- oder Glitch-Angriffe verwendet. Bei einem Lichtangriff wird der Datenträger gezielt mit Licht hoher Intensität bestrahlt, wodurch es in dem Datenträger zu Fehlfunktionen, insbesondere zu einer Manipulation des Befehlszählers, kommen kann. Bei einem Glitch-Angriff wird das Taktsignal des Prozessors des Datenträgers gezielt gestört, um Fehlfunktionen hervorzurufen. Das Dokument "Security Refresh: Prevent Malicious Wearout and Increase Durability for Phase-Change Memory with Dynamically Randomized Address Mapping", Proceedings of the 37th annual international symposium on Computer architecture (ISCA'10) beschreibt mit der eingeführten Security-Refresh-Methode einen Ansatz mit Permutation von Datenpositionen im Speicher. Aufgabe der vorliegenden Erfindung ist es, das Speichern und Ausführen von Schadcode auf dem Datenträger zu verhindern.
Diese Aufgabe wird durch ein Verfahren und einen Datenträger mit den Merkmalen der unabhängigen Ansprüche gelöst. Vorteilhafte Ausgestaltungen und Weiterbildungen sind in den abhängigen Ansprüchen angegeben. Ein erfindungsgemäßes Verfahren zum Verhindern eines Angriffs auf einen portablen Datenträger mittels ausführbaren Programmcodes, insbesondere Schadcodes, umfasst zumindest den Schritt des Umcodierens eines in einem Speicher des Datenträgers zu speichernden oder bereits in dem Speicher des Datenträgers gespeicherten Datensatzes derart, dass, falls der Datensatz auf einem Prozessor des Datenträgers ausführbaren Programmcode umfasst, der Programmcode nicht mehr ausgeführt wird.

Ein erfindungsgemäßer Datenträger umfasst zumindest einen Speicher und einen Prozessor, wobei in dem Speicher ausführbarer Programmcode gespeichert werden kann, welcher auf dem Prozessor ausführbar ist. Erfindungsgemäß umfasst der Datenträger weiterhin eine Codiereinrichtung, welche eingerichtet ist, einen in dem Speicher des Datenträgers zu speichernden oder bereits in dem Speicher des Datenträgers gespeicherten Datensatz derart umzucodieren, dass, falls der Datensatz auf einem Prozessor des Datenträgers ausführbaren Programmcode umfasst, der Programmcode nicht mehr ausgeführt wird.

Vorzugsweise erfolgt der Schritt des Umcodierens eines in dem Speicher des Datenträgers zu speichernden Datensatzes vor dem Speichern des Datensatzes. Ein bereits in dem Speicher gespeicherter Datensatz kann aber auch nachträglich umcodiert und dann in umcodierter Form statt in der ursprünglichen Form in dem Speicher des Datenträgers gespeichert werden.

Auf diese Weise wird das Speichern von Schadcode auf dem Datenträger verhindert, da der umcodiert gespeicherte Datensatz für den Prozessor des Datenträgers nicht mehr als Schadcode erkennbar ist bzw. durch das Umcodieren ist der Schadcode nicht mehr nativ ausführbar, da er kein sinnvoll ausführbarer Assemblercode mehr ist. Entsprechend kann auch keine Ausführung des ursprünglich in dem Datensatz befindlichen Schadcodes mehr stattfinden.

Gemäß einer ersten Ausführungsform des Verfahrens wird jeder Datensatz, der in den Speicher des Datenträgers geschrieben werden soll, vor dem Speichern umcodiert, unabhängig davon, ob eventuell weitere, nachstehend beschriebene Untersuchungen des Datensatzes Anlass dazu geben, den Datensatz als potentiell gefährdend anzusehen. Um einen umcodierten Datensatz, der beispielsweise in seiner ursprünglichen Form lediglich gewöhnliche Nutzdaten umfasst, für einen Nutzer des Datenträgers bzw. für eine Applikation auf dem Datenträger, welche auf den Datensatz lesend zugreift, wieder nutzbar zu machen, umfasst das erfindungsgemäße Verfahren vorzugsweise einen weiteren Schritt des Decodierens des umcodiert gespeicherten Datensatzes beim Auslesen des Datensatzes in dem Datenträger.

Umcodieren und Speichern bzw. Auslesen und Dekodieren werden dabei vorzugsweise durch entsprechende Funktionalitäten einer Steuerinstanz des Datenträgers, insbesondere durch Codier- und Speicher- bzw. Auslese- und Dekodierfunktionalitäten des Betriebssystems des Datenträgers, durchgeführt. Für den Nutzer bzw. lesend auf entsprechende Datensätze zugreifende Applikationen des Datenträgers bleibt daher das Umcodieren/Dekodieren transparent. Beim Versuch allerdings, den umcodierten Datensatz als Programmcode auszuführen, wie dies bei einem Angriff auf den Datenträger durch Manipulation des Befehlszählers des Datenträgers der Fall ist, wird direkt auf den umcodierten Datensatz zugegriffen. D.h. der umcodierte Datensatz wird als Programmcode interpretiert. Aufgrund der Umcodierung scheitert, wie nachfolgend detailliert beschrieben, die Ausführung des ursprünglich in dem noch nicht umcodierten Datensatz befindlichen, ausführbaren Programmcodes. Ein Angriff der einleitend beschriebenen Art kann somit wirkungsvoll verhindert werden, während gleichzeitig auf die Nutzdaten des Datenträgers in gewohnter Weise zugegriffen werden kann.

Der Schritt des Umcodierens des Datensatzes kann auf vielfältige Weise durchgeführt werden.

Gemäß einer ersten Variante erfolgt das Umcodieren derart, dass der gesamte Datensatz gemäß einer vorgegebenen Regel umcodiert wird, beispielsweise byteweise. D.h. gegebenenfalls in dem Datensatz enthaltener, ausführbarer Programmcode wird nach dem Umcodieren nicht mehr als solcher erkannt bzw. ausgeführt, da vormals vorhandene Opcodes (Nummern für einen Maschinenbefehl des Prozessors) durch andere bzw. eventuell nicht definierte "Opcodes" ersetzt werden. In der Regel wird der Prozessor des Datenträgers das Ausführen des umcodierten Programmcodes mit einem Fehler beenden oder gar nicht erst beginnen.

Im Schritt des Decodierens wird die Umcodierung für den gesamten Datensatz rückgängig gemacht.

Gemäß einer zweiten Variante wird nicht der gesamte Datensatz umcodiert, sondern es werden im Schritt des Umcodierens lediglich in nachstehend beschriebener Weise zusätzliche Füllblöcke an vorgegebenen Stellen des Datensatzes eingefügt. Die restlichen Teile des Datensatzes, zwischen den Füllblöcken, können unverändert verbleiben. Auf diese Weise wird verhindert, dass in dem Datensatz befindlicher, ausführbarer Code vom Befehlszähler überhaupt erreicht wird und, falls dies doch geschieht, allenfalls zu einem kleinen Teil ausgeführt wird.

Im Schritt des Dekodierens werden die beim Umcodieren hinzugefügten Füllblöcke wieder entfernt, so dass wieder der ursprüngliche Datensatz entsteht.

Die im Folgenden beispielhaft beschriebenen Umcodierungen können der ersten Variante zugeschrieben werden.

Ein Datensatz kann beispielsweise dadurch umcodiert werden, dass der Datensatz in Blöcke unterteilt wird, wobei eine Anordnung der Blöcke vor dem Speichern der Blöcke permutiert wird. Blöcke können beispielsweise ein oder mehrere Bytes des Datensatzes sein. Diese Vorgehensweise umfasst beispielsweise das Speichern von Bytes des Datensatzes in einer vorgegebenen, von der Standardreihenfolge abweichenden Schreibreihenfolge bzw. in vorgegeben "verwürfelter" Reihenfolge.

Alternativ kann der Datensatz dadurch umcodiert werden, dass der Datensatz in Blöcke unterteilt wird und die Blöcke in Unterblöcke unterteilt werden, wobei eine Anordnung der Unterblöcke vor dem Speichern permutiert wird. Diese Vorgehensweise umfasst beispielsweise das binäre Verschieben des Inhalts eines jeden oder lediglich ausgewählter Datenbytes vor dem Speichern. Andere Arten der Permutation der Unterblöcke sind möglich.

Die beschriebene Permutation der Unterblöcke kann mit einem Permutieren der die Unterblöcke umfassenden Blöcke des Datensatzes kombiniert werden.

Eine weitere Möglichkeit des Umcodierens des Datensatzes besteht darin, den Datensatz mit einem vorgegebenen Umcodierungsdatensatz mittels einer XOR-Operation zu verknüpfen. Dabei kann ein einheitlicher Umcodierungsdatensatz für jeden umzucodierenden Datensatz vorgesehen sein. Es ist aber auch möglich, dass zum Umcodieren verschiedener Datensätze oder gar zum Umcodieren verschiedener Blöcke eines umzucodierenden Datensatzes jeweils verschiedene Umcodierungsdatensätze zum Einsatz kommen. Die jeweiligen Umcodierungsdatensätze können auf verschiedene Weise erzeugt werden, vorzugsweise zufallsbasiert und/oder datenträgerabhängig.

Die im Folgenden beispielhaft beschriebenen Umcodierungen beschreiben Ausführungsformen gemäß der zweiten Variante.

Hierbei wird der Datensatz beispielsweise dadurch umcodiert, dass der Datensatz in Blöcke unterteilt wird und dass ein oder mehrere zusätzliche Füllblöcke an vorgegebenen Stellen zwischen einzelne Blöcke des Datensatzes eingefügt werden. Der oder die Füllblöcke umfassen dabei vorzugsweise für den Prozessor des Datenträgers ausführbaren Programmcode.

Der als Füllblock eingefügte Programmcode kann beispielsweise so ausgewählt werden, dass der Prozessor in eine Endlosschleife läuft, einen Fehlerzähler inkrementiert, zu einer Stilllegungsroutine des Datenträgers springt oder dergleichen. D.h. der durch einen Füllblock eingefügte Programmcode hält den Prozessor in geeigneter Weise davon ab, in dem Datensatz nach dem Füllblock oder zwischen den Füllblöcken gegebenenfalls befindlichen Programmcode überhaupt zu erreichen und, falls doch, allenfalls teilweise auszuführen.

Vorzugsweise haben derartige Füllblöcke eine konstante Größe, beispielsweise ein bis drei Bytes, und werden in regelmäßigen Abständen in den Datensatz, d.h. zwischen zwei Blöcke des Datensatzes eingefügt, beispielsweise stets nach "n" Bytes. Dies erleichtert den Decodierungsschritt, welcher dann lediglich im Entfernen des Füllblocks bekannter Länge nach jeweils "n" Datenbytes besteht. Der Abstand "n" kann abhängig vom Datenträger und den jeweiligen Sicherheitsanforderungen gewählt oder jeweils variabel festgesetzt werden.

Weiter ist es möglich, nach jeweils "m" Datenbytes des Datensatzes einen Füllblock der Länge "m+1" Bytes einzufügen, wobei der Füllblock vorgegebene, geeignete Opcodes umfasst. In der Regel ist dabei m=1 oder m=2. Diese Vorgehensweise engt einen Angreifer, welcher versucht, ausführbaren Programmcode in den Datenträger "einzuschleusen", beträchtlich ein, da eine große Anzahl von Opcodes nach der Umcodierung nicht mehr dargestellt werden können. Auch in diesem Fall kann der Schritt des Dekodierens in einfacher Weise durch simples Löschen der in regelmäßiger Weise und in konstanter Länge hinzugefügten Füllblöcke erfolgen.

Gemäß einer dritten Variante schließlich kann in bestimmten Fällen das Umcodieren derart erfolgen, dass der Schritt des Dekodierens entfallen kann, wobei die umcodierten Daten für den Nutzer bzw. lesend zugreifende Applikationen weiterhin lesbar sind.

Dabei wird der Datensatz dadurch umcodiert, dass, wenn der Datensatz in einem ersten bekannten Datenformat vorliegt, der Datensatz in ein zweites bekanntes Datenformat derart umcodiert wird, dass beim Auslesen des umcodierten Datensatzes ein Decodieren unterbleiben kann. Bekannte Beispiele für ein solches erstes und zweites Datenformat sind 7-Bit-ACSII und Unicode. In dieser Weise können somit beispielsweise einfache Textdateien umcodiert werden und bleiben in Form einer Unicode-codierten Datei weiterhin lesbar. Verbirgt sich in einer ASCII-Datei allerdings ausführbarer Programmcode, so bewirkt die Umcodierung nach Unicode, dass der umcodierte Programmcode nicht mehr "bestimmungsgemäß" ausführbar ist.

Um die Sicherheit des Datenträgers und den Schutz vor Schadcode zu erhöhen, können zusätzliche Maßnahmen vorgesehen sein. Ein erster optionaler Verfahrensschritt dient dem Untersuchen eines in dem Speicher des Datenträgers zu speichernden oder bereits in dem Speicher des Datenträgers gespeicherten Datensatzes dahingehend, ob der Datensatz auf dem Prozessor des Datenträgers ausführbaren Programmcode umfasst. Ein erfindungsgemäßer portabler Datenträger kann dazu zusätzlich eine entsprechende Untersuchungseinrichtung umfassen.

Mittels des optionalen Schritts des Untersuchens des betreffenden, zu speichernden oder bereits gespeicherten Datensatzes dahingehend, ob der Datensatz auf dem Prozessor des Datenträgers ausführbaren Programmcode umfasst, wird somit bereits der erste Schritt des einleitend skizzierten Angriffs, nämlich das Speichern von Schadcode in einem Speicher des Datenträgers, wirkungsvoll verhindert oder zumindest nachträglich erkannt. Solcher Schadcode umfasst stets typische Charakteristika ausführbaren Programmcodes, welche erfindungsgemäß untersucht und erkannt werden können. Auch als Nutzdaten "getarnte" Datensätze, also solche, die beispielsweise anhand deren Dateierweiterung als vermeintlich nicht ausführbar bezeichnet sind, werden erfindungsgemäß untersucht. Auf diese Weise wird ein "Einschleusen" von Schadcode in einen portablen Datenträger zumindest erheblich erschwert bzw. wird bereits in dem Datenträger gespeicherter Schadcode nachträglich erkannt. Dadurch kann bereits das Speichern von Schadcode und folglich das Ausführen desselben auf dem Datenträger effektiv verhindert werden.

Der Schritt des Untersuchens des Datensatzes erfolgt in der Regel anhand in dem Datensatz vorkommender Programmcodefragmente und/oder anhand vorgegebener Signaturen. Jede Art von ausführbarem Programmcode umfasst charakteristische Programmcodefragmente, mittels derer immer wiederkehrende, wesentliche Programmabläufe oder Programmstrukturen, wie beispielsweise Schleifen, Verzweigungen, Sprünge und dergleichen implementiert werden - und anhand derer ausführbarer Programmcode als solcher erkannt werden kann. Beim Bilden einer Signatur über einen Datensatz werden in bekannter Weise wesentliche Strukturelemente des Datensatzes, beispielsweise entsprechend den vorgenannten Programmcodefragmenten, in komprimierter Form erfasst. Die Signatur bildet quasi einen "Fingerabdruck" des Datensatzes, anhand dessen der Datensatz erkannt werden kann.

Die vorgegebenen Programmcodefragmente, nach denen im Schritt des Untersuchens des Datensatzes gesucht wird, sowie die Signaturen, anhand derer ein Datensatz als Schadcode erkannt werden kann, werden vorzugsweise in dem Datenträger aktualisierbar gespeichert.

Abhängig von einem Ergebnis der Untersuchung des Datensatzes kann der Datensatz als potentiell ausführbaren Programmcode umfassend, d.h. potentiell gefährdend, markiert werden. Diese Vorgehensweise bietet sich für die Fälle an, in denen eine Untersuchung des Datensatzes zwar Anzeichen erkennen lässt, welche auf ausführbaren Programmcode in dem Datensatz hindeuten, aber kein endgültiges diesbezügliches Resultat zulassen. Auch eine erkannte Signatur, welche bekannten Schadcodesignaturen zumindest nahe kommt, kann Anlass zu einer beschriebenen Markierung geben.

Gemäß einer bevorzugten Ausführungsform des erfindungsgemäßen Verfahrens wird nicht jeder Datensatz, der in den Speicher des Datenträgers geschrieben werden soll oder bereits dort gespeichert ist, erfindungsgemäß umcodiert, sondern lediglich solche Datensätze, welche in einem vorgelagerten Schritt des Untersuchens als potentiell gefährdend markiert worden sind. Auf diese Weise können Ressourcen des Datenträgers eingespart werden, da für offensichtlich unkritische Datensätze ein Umcodieren und anschließendes Dekodieren entfallen kann.

Weiter kann, abhängig von einem Ergebnis der Untersuchung des Datensatzes, der zu speichernde Datensatz nicht in dem Speicher des Datenträgers gespeichert werden bzw. der bereits gespeicherte Datensatz aus dem Speicher des Datenträgers gelöscht werden. Diese Vorgehensweise bietet sich für die Fälle an, in denen die Untersuchung des Datensatzes mit sehr hoher Wahrscheinlichkeit auf in dem Datensatz befindlichen, ausführbaren Programmcode schließen lässt, beispielsweise anhand einer Vielzahl erkannter, vorgegebener Programmcodefragmente und/oder anhand einer gespeicherten, erkannten Signatur. Alternativ oder zusätzlich kann der Datenträger ein Signal ausgeben, welches einem Nutzer des Datenträgers und/oder einem Terminal oder dergleichen anzeigt, dass der Datensatz als ausführbaren Programmcode umfassend und somit potentiell gefährdend angesehen wird.

Für den Fall, dass es einem Angreifer trotz der vorstehend beschriebenen Maßnahmen gelingt, einen Schadcode umfassenden Datensatz in dem Speicher des Datenträgers zu speichern, können weitere Verfahrensschritte vorgesehen sein, mittels welcher verhindert werden kann, dass solcher Schadcode, beispielsweise als Folge eines manipulierten Befehlszählers, in dem Datenträger ausgeführt wird.

In einem ersten weiteren Verfahrensschritt wird zumindest ein kritischer Adressbereich des Speichers des Datenträgers vorgegeben. Dieser Adressbereich ist nicht zum Speichern von ausführbarem Programmcode vorgesehen. In einem zweiten weiteren Verfahrensschritt wird geprüft, ob ein Befehlszähler des Datenträgers in den kritischen Adressbereich des Speichers des Datenträgers zeigt. Demgemäß kann ein erfindungsgemäßer portabler Datenträger zusätzlich entsprechende Mittel in Form einer Speicherbereichsvorgabeeinrichtung und einer Befehlszählerprüfeinrichtung umfassen.

Wenn es einem Angreifer dennoch gelingt, Schadcode, d.h. ausführbaren Programmcode, in dem Speicher des Datenträgers zu speichern, so wird dieser Code in dem kritischen Adressbereich gespeichert werden. Wenn es dem Angreifer weiter gelingt, den Befehlszähler des Datenträgers, beispielsweise durch externes Einwirken auf den Datenträger, derart zu verändern, dass dieser in den kritischen Adressbereich zeigt, in dem der Schadcode gespeichert ist, so wird dennoch keine Ausführung des Schadcodes erfolgen. Denn die Manipulation des Befehlszählers wird durch den zweiten weiteren Verfahrensschritt des Prüfens, ob der Befehlszähler in den kritischen Adressbereich des Speichers des Datenträgers zeigt, sicher erkannt.

Vorzugsweise wird der Schritt des Prüfens, ob der Befehlszähler des Datenträgers in den kritischen Adressbereich des Speichers des Datenträgers zeigt, periodisch wiederholt.

Bevorzugt wird der Schritt des Prüfens, ob der Befehlszähler des Datenträgers in den kritischen Adressbereich des Speichers des Datenträgers zeigt, unter Verwendung einer nicht maskierbaren Hardware-Unterbrechung durchgeführt. Auf diese Weise wird sichergestellt, dass nicht softwareseitig, beispielsweise mittels einer Funktionalität des Schadcodes, eine Prüfung des Befehlszählers umgangen werden kann.

In dem Fall allerdings, dass der Befehlszähler in den kritischen Adressbereich zeigt, was als Angriff auf den Datenträger erkannt wird, werden geeignete Schutzmaßnahmen für den Datenträger eingeleitet. Alternativ oder zusätzlich kann auch geprüft werden, ob der Befehlszähler einen Speicherbereich der jeweiligen Anwendung verlassen hat.

Dabei sind abhängig von der Art des Datenträgers, der Art des Angriffs und der Art der auf dem Datenträger gespeicherten, vor einem Angriff zu schützenden Daten verschiedene Schutzmaßnahmen möglich. Eine solche Schutzmaßnahme für den Datenträger kann beispielsweise dadurch eingeleitet werden, dass der Datenträger deaktiviert wird. Dadurch wird der aktuell erkannte Angriff wirkungsvoll abgewehrt. Ein weiterer, gleichartiger Angriff auf den Datenträger kann somit nicht mehr erfolgen. Alternativ oder zusätzlich können zumindest Teile des Speichers des Datenträgers, insbesondere solche, die schützenswerte oder geheime Daten umfassen, gelöscht oder gar zerstört werden. Auf diese Weise wird wirkungsvoll verhindert, dass ein Angreifer sensible Daten, auch nach einem erkannten Angriff, aus dem Datenträger auslesen kann, selbst wenn er sich weiterer Mittel bedienen würde.

Die vorliegende Erfindung wird im Folgenden mit Bezug auf die beiliegenden Zeichnungen beispielhaft beschrieben. Darin zeigen:
- Figur 1: eine bevorzugte Ausführungsform eines erfindungsgemäßen Datenträgers; und
- Figuren 2 und 3: zwei schematische Ansichten eines Datensatzes, gespeichert einmal in gewöhnlicher und einmal in erfindungsgemäß umcodierter Weise.

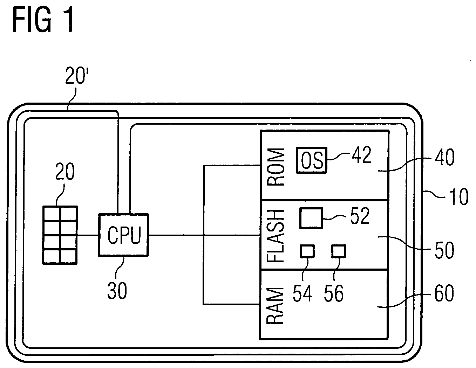

Mit Bezug auf Fig. 1 umfasst ein Datenträger 10, der hier als Chipkarte dargestellt ist, Datenkommunikationsschnittstellen 20, 20', einen Prozessor 30 sowie verschiedene Speicher 40, 50 und 60. Der Datenträger 10 kann auch in anderer Bauform vorliegen.

Als Datenkommunikationsschnittstellen 20, 20' umfasst der Datenträger 10 ein Kontaktfeld 20 zur kontaktbehafteten Datenkommunikation sowie eine Antennenspule 20' zur kontaktlosen Datenkommunikation. Alternative Datenkommunikationsschnittstellen können vorgesehen sein. Es ist weiterhin möglich, dass der Datenträger 10 lediglich eine Art der Datenkommunikation unterstützt, also lediglich kontaktbehaftet oder kontaktlos.

Der nicht flüchtige, nicht wiederbeschreibbare ROM-Speicher 40 umfasst ein Betriebssystem (OS) 42 des Datenträgers 10, welches den Datenträger 10 steuert. Zumindest Teile des Betriebssystems 42 können auch in dem nicht flüchtigen, wiederbeschreibbaren Speicher 50 gespeichert sein. Dieser kann beispielsweise als FLASH-Speicher vorliegen.

Der Speicher 50 umfasst eine Codiereinrichtung 52, einen ein oder mehrere Umcodierungsschlüssel umfassenden Datensatz 54 sowie einen Datensatz 56, welcher ein oder mehrere Füllblöcke umfasst. Die Bedeutung der Datensätze 54, 56 sowie die Funktionalität der Codiereinrichtung 52 wird nachstehend genauer beschrieben.

Der Speicher 50 kann weiterhin Nutzdaten, d.h. nicht ausführbare Daten in Form von beispielsweise Textdateien, Foto-, Audio- oder Videodaten oder dergleichen, und/oder ausführbaren Programmcode, beispielsweise bereits installierte Applikationen, enthalten.

Der flüchtige, wiederbeschreibbare RAM-Speicher 60 dient dem Datenträger 10 als Arbeitsspeicher.

Die vorstehend genannten Daten und Einrichtungen 52, 54, 56 werden in nachstehender Weise eingesetzt, um das Ausführen von Schadcode in dem Datenträger 10 zu verhindern.

Die Codiereinrichtung 52 ist eingerichtet, einen in einem Speicher 50 des Datenträgers 10 zu speichernden oder bereits in dem Speicher 50 des Datenträgers 10 gespeicherten Datensatz 100 derart umzucodieren, dass, falls der Datensatz 100 auf einem Prozessor 30 des Datenträgers 10 ausführbaren Programmcode umfasst, der Programmcode nicht mehr ausgeführt wird.

Die Codiereinrichtung 52 ist dabei in der Regel Teil des Betriebssystems 42 des Datenträgers 10. Die Codiereinrichtung 52 ist weiter eingerichtet, umcodiert in dem Speicher 50 gespeicherte Daten beim Auslesen derselben wieder zu decodieren. D.h. der Umcodierungs- und Decodierungsprozess bleibt für einen Nutzer des Datenträgers 10 sowie für lesend auf einen entsprechenden Datensatz 100 zugreifende Applikationen des Datenträgers 10 bzw. für ein Terminal oder dergleichen, welches den Datensatz 100 ausliest, transparent.

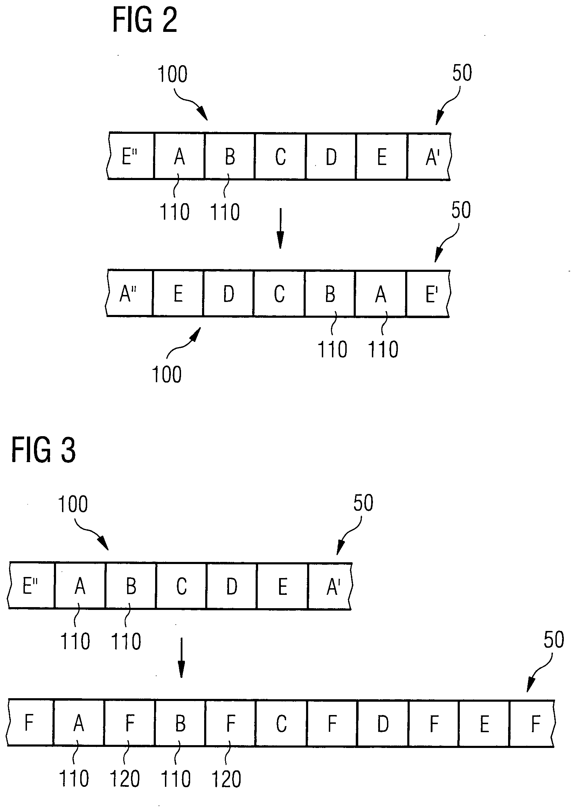

Mit Bezug auf die Figuren 2 und 3 sind zwei prinzipielle Arten der Umcodierung, mittels welcher verhindert wird, dass in dem Datensatz 100 befindlicher, ausführbarer Programmcode ausgeführt wird, illustriert.

Gemäß einer ersten, in Fig. 2 gezeigten Variante wird der gesamte Datensatz 100 vollständig umcodiert. D.h. die Umcodierung betrifft, vorzugsweise in einheitlicher Weise, den gesamten Datensatz 100 und wird derart durchgeführt, dass der umcodierte Datensatz 100 für den Prozessor 30 des Datenträgers 10 als Programmcode nicht mehr, auch nicht mehr teilweise, ausgeführt werden kann.

Die Umcodierung verändert dabei die Codierung des Datensatzes 100 auf einer vergleichsweise grundlegenden Stufe, d.h. insbesondere auf der Ebene zu speichernder Bytes oder gar Bits. Eine Umcodierung auf dieser Stufe verändert ausführbaren Programmcode somit auf der Ebene der Opcodes. Umcodierter Programmcode umfasst daher entweder für den jeweiligen Prozessor nicht definierte Opcodes oder aber Opcodes in einer Reihenfolge, welche keine sinnvoll ausführbaren Instruktionen mehr ergeben. Beim Versuch, solchen umcodierten "Programmcode" auszuführen, wird der Prozessor demnach in der Regel zu Beginn mit einer Fehlermeldung aussteigen und die Ausführung beenden.

Der Datensatz 100 besteht in dem gezeigten Beispiel aus den Blöcken 110 A bis E. Die schematische Ansicht im oberen Teil der Fig. 2 zeigt den Datensatz 100, wie er unverändert, d.h. nicht umcodiert, in dem Speicher 50 gespeichert werden würde. Im unteren Teil der Fig. 2 ist das Ergebnis der Umcodierung gezeigt. Diese besteht hier darin, dass der Datensatz in die Blöcke 110 A, B, C, D und E unterteilt worden ist und diese Blöcke 110 in umgekehrter Reihenfolge E, D, C, B, A in dem Speicher 50 gespeichert werden. In ähnlicher Weise kann, wie in Fig. 2 angedeutet, für weitere Datensätze vorgegangen werden.

Die Blöcke 110 können beispielsweise einzelne Bytes oder Gruppen von Bytes des Datensatzes 100 darstellen, wobei die Blöcke 110 vorzugsweise die gleiche Größe aufweisen. Die der Umcodierung zugrunde liegende, geänderte Speicherreihenfolge kann auch auf andere Weise gewählt werden, beispielsweise zufallsgesteuert verwürfelt oder dergleichen.

Die Umcodierung kann alternativ oder zusätzlich auch die Codierung der einzelnen Blöcke betreffen. Dazu können einzelne oder alle Blöcke 110 wieder in vorzugsweise gleich große Unterblöcke unterteilt werden, deren Speicherreihenfolge dann im Rahmen der Umcodierung in vorgegebener Weise geändert wird. Sind die Blöcke 110 beispielsweise Bytes des Datensatzes 100, können die Unterblöcke (nicht gezeigt) als die Bits eines Bytes definiert werde. Eine Umcodierung kann auf Bitebene beispielsweise durch einen Bitshift, d.h. ein binäres Verschieben der Bits innerhalb des Bytes, erfolgen. Aus dem Byte "11001010" wird dann beispielsweise durch einen Shift um zwei Bits nach rechts das umcodierte Byte "10110010".

Eine andere Möglichkeit, den Datensatz 100 vollständig umzucodieren besteht darin, eine Verknüpfung oder Verschlüsselung des Datensatzes 100 mit einem vorgegebenen oder berechneten Umcodierungsschlüssel vorzunehmen. Ein oder mehrere solcher Umcodierungsschlüssel sind in dem Datensatz 54 gespeichert.

Eine einfach durchzuführende Verknüpfung in diesem Zusammenhang ist die XOR-Verknüpfung. Auch diese operiert auf unterster Ebene, d.h. der Bitebene und hat demnach die bereits vorstehend beschriebenen Effekte hinsichtlich der Ausführbarkeit umcodierten Programmcodes.

Gemäß einer einfachen Ausführungsform kann ein Umcodierungsschlüssel, d.h. ein Bitvektor vorgegebener Länge, vorgesehen sein, wobei jeweils ein Datensatz entsprechender Länge dadurch umcodiert wird, dass er mit dem Umcodierungsvektor XOR-verknüpft wird.

Weitere Ausführungsformen können vorsehen, dass mehrere verschiedene Umcodierungsvektoren bereitstehen oder von der Codiereinrichtung 52 bei Bedarf erzeugt werden, so dass verschiedene Datensätze 100 oder verschiedene Teile 110 A, B, C, D, E eines Datensatzes 100 mittels verschiedener Umcodierungsschlüssel in unterschiedlicher Weise umcodiert werden können.

Der oder die Umcodierungsschlüssel können dabei beispielsweise zufallsbasiert und/oder datenträgerabhängig erzeugt werden. Die Erzeugung weiterer Umcodierungsschlüssel kann von bereits vorhandenen abhängen, beispielsweise durch bitweises Verschieben eines bereits vorhandenen Umcodierungsschlüssels oder dergleichen.

Gemäß einer zweiten Variante, welche mit Bezug auf Fig. 3 illustriert ist, wird nicht der gesamte Datensatz 100 auf niedriger Stufe, d.h. z.B. auf Byte-oder gar Bit-Ebene, umcodiert, sondern einzelne Anteile des Datensatzes 100, wieder dargestellt durch einzelne Blöcke 110 A, B, C, D, E, welche den Datensatz 100 bilden, bleiben bei der Umcodierung an sich unverändert.

Zum Zweck der Umcodierung des Datensatzes 100 werden jedoch zwischen den einzelnen Anteilen 110 A, B, C, D, E spezielle Füllblöcke 120 F eingefügt. Die Füllblöcke 120 F umfassen dabei für den Prozessor 30 des Datenträgers 10 ausführbaren Programmcode. Dieser Programmcode ist derart ausgebildet, dass, wenn der Befehlszähler diesen Programmcode erreicht und der Programmcode ausgeführt wird, ein Ausführen eventuell in dem Datensatz 100, d.h. in einem oder mehreren der Anteile 110 oder Blöcke A bis E, befindlichen Schadcodes sicher verhindert wird. Der Schritt des Dekodierens ist in dieser Variante besonders einfach, da lediglich die Füllblöcke 120 F wieder entfernt werden müssen.

Der in den Füllblöcken 120 F befindliche Programmcode kann beispielsweise dazu führen, dass der Datenträger 10 in eine Endlosschleife gerät. Gemäß einer anderen Variante kann ein Fehlerzähler hochgezählt werden, mit dem Effekt, dass, wenn der Fehlerzähler eine vorgegebene Schranke überschreitet, der Datenträger deaktiviert wird. Schließlich kann der in einem Füllblock 120 F befindliche Programmcode den Datenträger veranlassen, den Betrieb anzuhalten, beispielsweise mittels eines Sprungs in eine dazu vorgesehene Stilllegungsroutine oder dergleichen.

Verschiedene Füllblöcke 120 F können verschiedenen Programmcode umfassen. Es ist aber auch möglich, dass lediglich Füllblöcke 120 F eines bestimmten Typs, d.h. mit einer vorgegebenen Funktionalität, eingesetzt werden.

Anzahl und Größe der Anteile oder Blöcke 110 A, B, C, D, E des Datensatzes 100 sind variabel. Es ist möglich, dass diese Blöcke 110 wieder lediglich ein oder wenige Bytes umfassen. In einem solchen Fall werden die Füllblöcke 120 F von ähnlicher Länge gewählt und umfassen als ausführbaren Programmcode ausgewählte Opcodes des Prozessors 30. Wenn beispielsweise die Blöcke 110 m=1 oder m=2 Bytes umfassen, können Füllblöcke 120 F der Länge m+1 verwendet werden. Diese Art der Umcodierung macht es einem Angreifer praktisch unmöglich, eingeschleusten ausführbaren Programmcode durch den Prozessor 30 wie gewünscht ausführen zu lassen. Eine geeignete Auswahl und das Hinzufügen der Füllblöcke 120 F macht es in dem umcodierten Programmcode unmöglich, bestimmte, notwendige Opcodes, welche aus wenigen, beispielsweise zwei oder drei Bytes bestehen, zu codieren.

Es ist aber auch möglich, größere Blöcke 110 vorzusehen, welche durch die Umcodierung unverändert belassen werden, beispielsweise mit je n Bytes, wobei n deutlich größer als zwei ist. Diese Vorgehensweise ist ressourcensparender, schließt aber nicht vollständig aus, dass, wenn es dem Angreifer gelingt, beispielsweise durch externes Einwirken auf den Datenträger, den Befehlszähler derart zu manipulieren, dass dieser in einen der Anteile 110 zeigt, zumindest der ausführbare Programmcode, der in diesem Anteil gespeichert ist, ausgeführt wird. Erst wenn der Befehlszähler den nächsten Füllblock 120 F erreicht, greifen die beschriebenen Schutzmaßnahmen.

Um einer solchen Situation zu begegnen und/oder als zusätzlichen Schutz des Datenträgers 10 können weitere, ergänzende Schutzmaßnahmen vorgesehen sein.

Zum frühzeitigen Erkennen von Schadcode, vorzugsweise vor dem Speichern desselben in dem Speicher 50 des Datenträgers, kann eine Untersuchungseinrichtung (nicht gezeigt) vorgesehen sein. Diese ist eingerichtet, einen in den Speicher 50 zu speichernden oder bereits darin gespeicherten Datensatz dahingehend zu untersuchen, ob der Datensatz auf dem Prozessor 30 des Datenträgers 10 ausführbaren Programmcode umfasst. Diese Untersuchung kann beispielsweise anhand vorgegebener Programmcodefragmente und/oder vorgegebener Signaturen erfolgen, welche jeweils aktualisierbar in dem Speicher 50 des Datenträgers 10 gespeichert sein können.

Um Speicherressourcen des Datenträgers 10 zu sparen, kann es vorgesehen sein, lediglich solche Datensätze mittels der Codiereinrichtung 52 umzucodieren, welche auf Basis der Ergebnisse der Untersuchung des entsprechenden Datensatzes durch die Untersuchungseinrichtung zumindest gewisse Anzeichen dafür liefern, dass sie ausführbaren Programmcode umfassen. Auf ein Umcodieren offensichtlich unverdächtiger Datensätze kann dann verzichtet werden.

Als weitere Schutzmaßnahme kann der Datenträger 10 eine Speicherbereichsvorgabeeinrichtung umfassen. Diese ist eingerichtet, einen kritischen Adressbereich des Speichers des Datenträgers vorzugeben, welcher nicht zum Speichern von ausführbarem Programmcode vorgesehen ist. Dieser kritische Adressbereich umfasst in der Regel den Speicherbereich des Speichers 50, welcher einem Nutzer des Datenträgers zum Speichern von Nutzdaten zur Verfügung steht - und in welchem, wenn es einem Angreifer gelingt, Schadcode in den Datenträger zu einzuschleusen, dieser Schadcode gespeichert sein wird. Eine zusätzlich vorgesehene Befehlszählerprüfeinrichtung ist dann eingerichtet zu prüfen, ob ein Befehlszähler des Datenträgers in den kritischen Adressbereich des Speichers des Datenträgers zeigt. Die Speicherbereichsvorgabeeinrichtung ist vorzugsweise als eine Funktionalität eines Betriebssystems des Datenträgers ausgebildet. Die Befehlszählerprüfeinrichtung umfasst in der Regel eine Vorrichtung zum Auslösen einer nicht maskierbaren Hardware-Unterbrechung.

Auf diese Weise kann sichergestellt werden, dass eine Manipulation des Befehlszählers, welche für ein Ausführen in dem kritischen Adressbereich gespeicherten Schadcodes notwendig ist, sicher erkannt werden kann. Auf diese Weise kann somit auch das Ausführen kleiner Schadcodefragmente unterbunden werden, welche gemäß einer vorgegebenen Umcodierung, beispielsweise zwischen zwei beschriebenen Füllblöcken, noch in ausführbarer Form vorliegen.

Erkennt die Befehlszählerprüfeinrichtung, dass der Befehlszähler in den kritischen Adressbereich zeigt, beispielsweise aufgrund einer externen Einwirkung auf den Datenträger, können weitere Schutzmaßnahmen erfolgen, beispielsweise, indem der Datenträger 10 temporär deaktiviert oder vollständig außer Betrieb gesetzt wird. Auf diese Weise wird verhindert, dass Schadcode sensible Daten des Datenträgers 10 manipulieren oder auslesen kann. Alternativ können solche sensiblen Daten im Datenträger 10 gelöscht werden. Weiter kann derjenigen Bereich des Speichers 50, welcher von Schadcode befallen zu sein scheint, gelöscht oder, wie vorstehend beschrieben verändert, insbesondere umcodiert werden, so dass ein Ausführen des Schadcodes nicht mehr möglich ist.

Beide erwähnten, zusätzlichen Schutzmaßnahmen, d.h. sowohl das Untersuchen von in den Speicher 50 des Datenträgers 10 zu speichernden oder bereits darin gespeicherten Datensätzen hinsichtlich darin enthaltenem ausführbarem Programmcode als auch das Vorgeben eines kritischen Adressbereichs und das entsprechende Prüfen des Befehlszählers, können in dem Datenträger 10, abhängig von den zu erfüllenden Sicherheitsanforderungen, auch unabhängig von dem Umcodieren zu speichernder oder bereits gespeicherter Datensätze eingesetzt werden.

## Patentansprüche

1. Verfahren zum Verhindern eines Angriffs auf einen portablen Datenträger (10) mittels ausführbaren Programmcodes, insbesondere Schadcodes, umfassend den Schritt:
- Umcodieren eines in einem Speicher (50) des Datenträgers (10) zu speichernden oder bereits in dem Speicher (50) des Datenträgers (10) gespeicherten Datensatzes (100) derart, dass, falls der Datensatz (100) auf einem Prozessor (30) des Datenträgers (10) ausführbaren Programmcode umfasst, der Programmcode nicht mehr ausgeführt wird,
**dadurch gekennzeichnet, dass** der Datensatz (100) dadurch umcodiert wird, dass, wenn der Datensatz (100) in einem ersten bekannten Datenformat vorliegt, der Datensatz (100) in ein zweites bekanntes Datenformat derart umcodiert wird, dass beim Auslesen des umcodierten Datensatzes (100) ein Decodieren unterbleiben kann.

2. Verfahren nach Anspruch 1, **dadurch gekennzeichnet, dass** der Schritt des Umcodierens und gegebenenfalls der Schritt des Decodierens jeweils mittels einer Funktionalität des Betriebssystems (42) des Datenträgers (10) durchgeführt wird.

3. Verfahren nach einem der Ansprüche 1 bis 2, **gekennzeichnet durch** den weiteren Schritt, vor dem Schritt des Umcodierens:
- Untersuchen des in dem Speicher (50) des Datenträgers (10) zu speichernden oder bereits in dem Speicher des Datenträgers (10) gespeicherten Datensatzes (100) dahingehend, ob der Datensatz (100) auf dem Prozessor (30) des Datenträgers (10) ausführbaren Programmcode umfasst.

4. Verfahren nach einem der Ansprüche 1 bis 3, **gekennzeichnet durch** die weiteren Schritte:
- Vorgeben zumindest eines kritischen Adressbereichs des Speichers (50) des Datenträgers (10), welcher nicht zum Speichern von ausführbarem Programmcode vorgesehen ist, und
- Prüfen, ob ein Befehlszähler des Datenträgers (10) in den kritischen Adressbereich des Speichers (50) des Datenträgers (10) zeigt, wobei der Schritt des Prüfens periodisch wiederholt wird und/oder unter Verwendung einer nicht maskierbaren Hardware-Unterbrechung durchgeführt wird

5. Portabler Datenträger (10), umfassend zumindest einen Speicher (40; 50; 60) und einen Prozessor (30), wobei in dem Speicher (50) ausführbarer Programmcode gespeichert werden kann, welcher auf dem Prozessor (30) ausführbar ist, wobei eine Codiereinrichtung (52), welche eingerichtet ist, einen in einem Speicher (50) des Datenträgers (10) zu speichernden oder bereits in dem Speicher (50) des Datenträgers (10) gespeicherten Datensatz (100) derart umzucodieren, dass, falls der Datensatz (100) auf einem Prozessor (30) des Datenträgers (10) ausführbaren Programmcode umfasst, der Programmcode nicht mehr ausgeführt wird, **gekennzeichnet dadurch, dass** der Datensatz (100) dadurch umcodiert wird, dass, wenn der Datensatz (100) in einem ersten bekannten Datenformat vorliegt, der Datensatz (100) in ein zweites bekanntes Datenformat derart umcodiert wird, dass beim Auslesen des umcodierten Datensatzes ein Decodieren unterbleiben kann, und durch eine Speicherbereichsvorgabeeinrichtung, welche eingerichtet ist, einen kritischen Adressbereich des Speichers (50) des Datenträgers (10) vorzugeben, welcher nicht zum Speichern von ausführbarem Programmcode vorgesehen ist, und durch eine Befehlszählerprüfeinrichtung, welche eingerichtet ist zu prüfen, ob ein Befehlszähler des Datenträgers (10) in den kritischen Adressbereich des Speichers (50) des Datenträgers (10) zeigt, wobei die Speicherbereichsvorgabeeinrichtung als eine Funktionalität eines Betriebssystems (42) des Datenträgers (10) ausgebildet ist und die Befehlszählerprüfeinrichtung eine Vorrichtung zum Auslösen einer nicht maskierbaren Hardware-Unterbrechung umfasst.

6. Datenträger (10) nach Anspruch 5, **gekennzeichnet durch** eine Untersuchungseinrichtung, welche eingerichtet ist, einen in einem Speicher (50) des Datenträgers (10) zu speichernden oder bereits in dem Speicher (50) des Datenträgers (10) gespeicherten Datensatz (100) dahingehend zu untersuchen, ob der Datensatz (100) auf dem Prozessor (30) des Datenträgers (10) ausführbaren Programmcode umfasst, wobei die Untersuchungseinrichtung als Softwarefunktionalität ausgebildet ist und einen Teil einer Firmware des Datenträgers (10) bildet.

## Claims

1. A method for preventing an attack on a portable data carrier (10) by means of executable program code, in particular malicious code, comprising the step of:
recoding a data set (100) to be stored in a memory (50) of the data carrier (10) or already stored in the memory (50) of the data carrier (10) in such a way that if the data set (100) comprises program code executable on a processor (30) of the data carrier (10), the program code will no longer be executed,
**characterized in that** the data set (100) is recoded by, when the data set (100) is present in a first known data format, the data set (100) being recoded into a second known data format in such a way that upon readout of the recoded data set (100) a decoding can be omitted.

2. The method according to claim 1, **characterized in that** the step of recoding and, where applicable, the step of decoding is respectively performed by means of a functionality of the operating system (42) of the data carrier (10).

3. The method according to either of claims 1 or 2, **characterized by** the further step of, prior to the step of recoding:
- examining the data set (100) to be stored in the memory (50) of the data carrier (10) or already stored in the memory of the data carrier (10) as to whether the data set (100) comprises program code executable on the processor (30) of the data carrier (10).

4. The method according to any of claims 1 to 3, **characterized by** the further steps of:
- specifying at least one critical address region of the memory (50) of the data carrier (10), which is not provided for storing executable program code, and
- checking whether an instruction counter of the data carrier (10) points into the critical address region of the memory (50) of the data carrier (10), the step of checking being repeated periodically and/or being performed using a non-maskable hardware interrupt.

5. A portable data carrier (10), comprising at least one memory (40; 50; 60) and a processor (30), wherein in the memory (50) there can be stored executable program code, which is executable on the processor (30), wherein a coding device (52), which is arranged for recoding a data set (100) to be stored in a memory (50) of the data carrier (10) or already stored in the memory (50) of the data carrier (10) in such a way that, if the data set (100) comprises program code executable on a processor (30) of the data carrier (10), the program code will no longer be executed,
**characterized in that** the data set (100) is recoded by, when the data set (100) is present in a first known data format, the data set (100) being recoded into a second known data format in such a way that upon readout of the recoded data set a decoding can be omitted, and by a memory region specification device, which is arranged for specifying a critical address region of the memory (50) of the data carrier (10), which is not provided for storing executable program code, and by an instruction counter checking device which is arranged for checking whether an instruction counter of the data carrier (10) points into the critical address region of the memory (50) of the data carrier (10), the memory region specification device being configured as a functionality of an operating system (42) of the data carrier (10) and the instruction counter checking device comprising an apparatus for triggering a non-maskable hardware interrupt.

6. The data carrier (10) according to claim 5, **characterized by** an examining device which is arranged for examining a data set (100) to be stored in a memory (50) of the data carrier (10) or already stored in the memory (50) of the data carrier (10) as to whether the data set (100) comprises program code executable on the processor (30) of the data carrier (10), the examining device being configured as a software functionality and forming a part on a firmware of the data carrier (10).

## Revendications

1. Procédé destiné à empêcher une attaque sur un support de données portable (10) au moyen de code de programme exécutable, en particulier de code malveillant, comprenant l'étape :
- transcodage d'un jeu de données (100) à mémoriser dans une mémoire (50) du support de données (10) ou déjà mémorisé dans la mémoire (50) du support de données (10), de telle sorte que, dans le cas où le jeu de données (100) comprend du code de programme exécutable sur un processeur (30) du support de données (10), le code de programme n'est plus exécuté,
**caractérisé en ce que** le jeu de données (100) est transcodé **en ce que**, quand le jeu de données (100) se trouve dans un premier format de données connu, le jeu de données est transcodé de telle façon en un deuxième format de données connu que, lors de la lecture du jeu de données (100) transcodé, un décodage peut être supprimé.

2. Procédé selon la revendication 1, **caractérisé en ce que** l'étape du transcodage et éventuellement l'étape du décodage est respectivement effectuée au moyen d'une fonctionnalité du système d'exploitation (42) du support de données (10).

3. Procédé selon une des revendications de 1 à 2, **caractérisé par** l'autre étape, avant l'étape du transcodage :
- examen du jeu de données (100) à mémoriser dans la mémoire (50) du support de données (10) ou déjà mémorisé dans la mémoire du support de données (10), pour discerner si le jeu de données (100) comprend du code de programme exécutable sur le processeur (30) du support de données (10).

4. Procédé selon une des revendications de 1 à 3, **caractérisé par** les autres étapes :
- prédétermination d'au moins une zone d'adresses critique de la mémoire (50) du support de données (10) non prévue pour la mémorisation de code de programme exécutable, et
- vérification pour discerner si un compteur d'instructions du support de données (10) désigne la zone d'adresses critique de la mémoire (50) du support de données (10), cependant que l'étape de la vérification est réitérée périodiquement et/ou est effectuée en utilisant une interruption hardware non masquable.

5. Support de données portable (10) comprenant au moins une mémoire (40; 50; 60) et un processeur (30), cependant que, dans la mémoire (50), du code de programme exécutable peut être mémorisé, lequel est exécutable sur le processeur (30), et un équipement de codage (52) conçu pour transcoder de telle sorte un jeu de données (100) à mémoriser dans une mémoire (50) du support de données (10) ou déjà mémorisé dans la mémoire (50) du support de données (10) que, dans le cas où le jeu de données (100) comprend du code de programme exécutable sur un processeur (30) du support de données (10), le code de programme n'est plus exécuté,
**caractérisé en ce que** le jeu de données (100) est transcodé par le fait que, quand le jeu de données (100) se trouve dans un premier format de données connu, le jeu de données (100) est transcodé de telle façon en un deuxième format de données connu que, lors de la lecture du jeu de données transcodé, un décodage peut être supprimé, et par un équipement de prédétermination de zone de mémoire conçu pour prédéterminer une zone d'adresses critique de la mémoire (50) du support de données (10) non prévue pour la mémorisation de code de programme exécutable, et par un équipement de vérification de compteur d'instructions conçu pour vérifier si un compteur d'instructions du support de données (10) désigne la zone d'adresses critique de la mémoire (50) du support de données (10), cependant que l'équipement de prédétermination de zone de mémoire est réalisé sous forme d'une fonctionnalité du système d'exploitation (42) du support de données (10) et que l'équipement de vérification de compteur d'instructions comprend un dispositif destiné à déclencher une interruption hardware non masquable.

6. Support de données (10) selon la revendication 5, **caractérisé par** un équipement d'examen conçu pour examiner un jeu de données (100) à mémoriser dans une mémoire (50) du support de données (10) ou déjà mémorisé dans la mémoire (50) du support de données (10), pour discerner si le jeu de données (100) comprend du code de programme exécutable sur le processeur (30) du support de données (10), cependant que l'équipement d'examen est réalisé sous forme de fonctionnalité logicielle et constitue une partie d'un firmware du support de données (10).
